# EUROPEAN PATENT SPECIFICATION

(11) **EP 3 210 775 B1**
(45) Date of publication and mention of the grant of the patent: **19.05.2021**
(21) Application number: 17000282.8
(22) Date of filing: 22.02.2017
(51) Int. Cl.: B32B 17/10, B32B 27/30

(54) **INTERLAYER FOR LAMINATED GLASS AND LAMINATED GLASS**
ZWISCHENSCHICHT FUR VERBUNDGLAS UND VERBUNDGLAS
COUCHE INTERMÉDIAIRE POUR VERRE FEUILLETÉ ET VERRE FEUILLETÉ

(30) Priority: 24.02.2016 JP 2016032959
(43) Date of publication of application: 30.08.2017
(73) Proprietor: AGC Inc., Tokyo 100-8405 (JP)
(72) Inventor: NAKAMURA, Atsushi, Tokyo, 100-8405 (JP)
(74) Representative: Müller-Boré & Partner Patentanwälte PartG mbB

(56) References cited:
- US-A1- 2006 008 658
- US-A1- 2012 244 329
- US-A1- 2013 236 693
- US-A1- 2014 363 651

## Description

### FIELD

Embodiments of the present invention relate to an interlayer for laminated glass and a laminated glass using the same.

### BACKGROUND

A laminated glass including an interlayer made of resin or the like sandwiched between a pair of glass plates and compression bonded under heating is excellent in safety without scattering of fragments when broken, and therefore is widely used for window glass of a vehicle such as an automobile, window glass for a building, and the like. In recent years, the laminated glass having various functions imparted according to required functions by appropriately selecting an interlayer, in addition to the safety such as scattering prevention. There is high desire for the laminated glass having sound insulating property among the functions, and it is therefore attempted to increase the sound insulating performance of the laminated glass by using an interlayer made by laminating resin films different in property.

However, in the laminated glass using the interlayer made by laminating resin films different in property in order to increase the sound insulating performance, air bubbles are more likely to form during use than glass using an ordinary interlayer, furthermore, air bubbles formed at an initial stage have sometimes become nuclei and grown in a plane direction to form into air bubbles with large area in a flower pattern. Hereinafter, the air bubbles spreading in the plane direction in the flower pattern are also referred to as "Ice Flower-shaped foam".

To suppress such generation of air bubbles and growth of air bubbles in the plane direction in the laminated glass, for example, a method of providing a layer containing a polyvinyl acetal resin made by acetalizing a polyvinyl alcohol resin having an average degree of polymerization of more than 3000 in an interlayer made by laminating layers containing a polyvinyl acetal resin and a plasticizer, and adjusting the degree of acetylation or the degree of acetalization of the polyvinyl acetal resin and the like is described in Patent Reference 1. However, in the laminated glass using the interlayer described in Patent Reference 1, the effects of suppressing the formation of Ice Flower-shaped foam due to generation of air bubbles and growth of air bubbles are not sufficient.

### PRIOR ART REFERENCE

### PATENT REFERENCE

Patent Reference 1: International Publication Pamphlet No. 2011/081190

### SUMMARY

### PROBLEMS TO BE SOLVED BY THE INVENTION

The present invention has been made from the above-described viewpoint, and its object is to provide an interlayer for laminated glass having a multilayer structure, capable of sufficiently suppressing generation of air bubbles and increase of area of air bubbles when the interlayer is made into a laminated glass, and a laminated glass in which generation of air bubbles and increase of area of air bubbles in the interlayer is sufficiently suppressed.

### MEANS FOR SOLVING THE PROBLEMS

An interlayer for laminated glass of the present invention includes alternately laminated at least one skin layer and two or more core layers, the skin layer having a storage modulus of 1.0 × 10⁶ Pa or more measured by a dynamic viscoelasticity test under conditions of a frequency of 1 Hz, a swing angle gamma of 0.01% and a temperature of 20°C, and the core layers each having a storage modulus of less than 1.0 × 10⁶ Pa measured by same manner as the skin layer, wherein a value of a product of a value obtained by averaging thicknesses (mm) of the respective core layers and a thickness (mm) of the whole interlayer for laminated glass is 0.15 or more, wherein two outermost layers of the interlayer for laminated glass are composed of the skin layers.

A laminated glass of the present invention includes: a pair of glass plates facing each other; and the interlayer for laminated glass of the present invention sandwiched between the pair of glass plates.

### EFFECT OF THE INVENTION

The present invention can provide an interlayer for laminated glass having a multilayer structure, capable of sufficiently suppressing generation of air bubbles and increase of area of air bubbles, in particular, formation and growth of Ice Flower-shaped foam when the interlayer is made into a laminated glass, and a laminated glass in which generation of air bubbles and increase of area of air bubbles, in particular, formation and growth of Ice Flower-shaped foam in the interlayer is sufficiently suppressed.

### BRIEF DESCRIPTION OF THE DRAWINGS

[Fig. 1] is a cross-sectional view of an example of an embodiment of an interlayer for laminated glass of the present invention.
[Fig. 2] is a cross-sectional view of another example of the embodiment of the interlayer for laminated glass of the present invention.
[Fig. 3A] is a front view of still another example of the embodiment of the interlayer for laminated glass of the present invention.
[Fig. 3B] is a cross-sectional view taken along a line Y-Y of the interlayer for laminated glass illustrated in Fig. 3A.
[Fig. 3C] is a view illustrating the process of fabricating the interlayer for laminated glass illustrated in Fig. 3A.
[Fig. 4] is a cross-sectional view of an example of an embodiment of laminated glass of the present invention using the interlayer for laminated glass illustrated in Fig. 1.
[Fig. 5A] is a photograph showing a result of a foaming test relating to laminated glass in an example (Example 1).
[Fig. 5B] is a photograph showing a result of a foaming test relating to laminated glass in an example (Example 2).
[Fig. 5C] is a photograph showing a result of a foaming test relating to laminated glass in an example (Example 3).
[Fig. 5D] is a photograph showing a result of a foaming test relating to laminated glass in an example (Example 4).
[Fig. 5E] is a photograph showing a result of a foaming test relating to laminated glass in an example (Example 5).
[Fig. 5F] is a photograph showing a result of a foaming test relating to laminated glass in an example (Example 6).

### DETAILED DESCRIPTION

Hereinafter, embodiments of the present invention will be described. It should be noted that the present invention is not limited to these embodiments, and these embodiments may be changed or modified without departing from the scope of the present invention.

### [Interlayer for laminated glass]

An interlayer for laminated glass of the present invention is an interlayer for laminated glass including alternately laminated at least one skin layer and two or more core layers, the skin layer having a storage modulus of 1.0 × 10⁶ Pa or more measured by a dynamic viscoelasticity test under conditions of a frequency of 1 Hz, a swing angle gamma of 0.01% and a temperature of 20°C, and the core layers having a storage modulus of less than 1.0 × 10⁶ Pa, wherein a value of a product of a value obtained by averaging thicknesses (mm) of the respective core layers and a thickness (mm) of the whole interlayer for laminated glass is 0.15 or more, wherein two outermost layers of the interlayer for laminated glass are composed of the skin layers. Note that the value obtained by averaging the thicknesses (mm) of the core layers in the plurality of core layers is a value obtained by dividing the total value of the thicknesses (mm) of the core layers of the interlayer for laminated glass by the number of core layers, and hereinafter also referred to as a "core layer average thickness".

Note that in the following description, the storage modulus measured by the dynamic viscoelasticity test under the conditions of a frequency of 1 Hz, a swing angle gamma of 0.01 % and a temperature of 20°C is represented by a "storage modulus G'". The storage modulus G' of the skin layer is sometimes represented also by a "storage modulus G's" and the storage modulus G' of the core layer is sometimes represented also by a "storage modulus G'c". Further, the interlayer for laminated glass is simply referred also as an "interlayer". Besides, the unit of the thickness is mm unless otherwise stated.

The storage modulus G' can be measured by a dynamic viscoelasticity measurement apparatus by preparing, for example, a sample formed in a disk shape with a thickness d = 0.6 mm and a diameter of 12 mm, putting the sample under the above-described conditions, and using a measuring jig: parallel plate (diameter of 12 mm). As the dynamic viscoelasticity measurement apparatus, for example, Rotational Rheometer MCR301 (brand name) manufactured by Anton Paar GmbH can be used.

The interlayer of the present invention is configured to have at least two core layers (storage modulus G'c < 1.0 × 10⁶ Pa) and a skin layer (storage modulus G's ≧ 1.0 × 10⁶ Pa) between them, and the value of the product of the core layer average thickness and the thickness of the whole interlayer is 0.15 or more. The value of the product of 0.15 or more means a state that the thickness of each core layer and the thickness of the whole interlayer are large enough for air bubbles therein to easily move in the thickness direction of the interlayer. Both of them in such a particular relation suppress generation of air bubbles in laminated glass to be obtained and prevent generated air bubbles from spreading in a plane direction in a flower pattern.

The air bubbles are generated from air absorbed inside the interlayer gathering in the core layer along the plane direction of the layer due to heating or the like. The interlayer of the present invention has the above-described configuration to allow the air bubbles to grow not in the plane direction but in the thickness direction, and therefore can be considered to have effects of suppressing generation and increase of area of air bubbles, in particular, formation and growth of Ice Flower-shaped foam. Note that the "air bubble" in this description refers to an "air bubble" having a size at a level that is visually recognizable when viewing the laminated glass from a principal surface side. Hereinafter, the effects of suppressing generation and increase of area of air bubbles, in particular, formation and growth of Ice Flower-shaped foam are collectively referred to also as a "foaming suppressing effect".

The interlayer of the present invention is configured to have the core layer satisfying the storage modulus G'c and the skin layer satisfying the storage modulus G's which are alternately laminated and have the two or more core layers. The interlayer of the present invention is not particularly limited in the number of layers as long as the interlayer has the above-described laminated structure and the value of the product of the core layer average thickness and the thickness of the whole interlayer is 0.15 or more.

The interlayer of the present invention has a configuration in which two outermost layers are composed of the skin layers. For example, when the interlayer has two core layers, the interlayer preferably has a configuration in which the two core layers hold one skin layer therebetween and two more skin layers hold the core layers holding one skin layer therebetween. Furthermore, the number of core layers in the interlayer is preferably three or more. Forming the configuration of the interlayer into such a preferable configuration enhances the foaming suppressing effect. Note that from the viewpoint of reduction in weight, the number of core layers in the interlayer is preferably three.

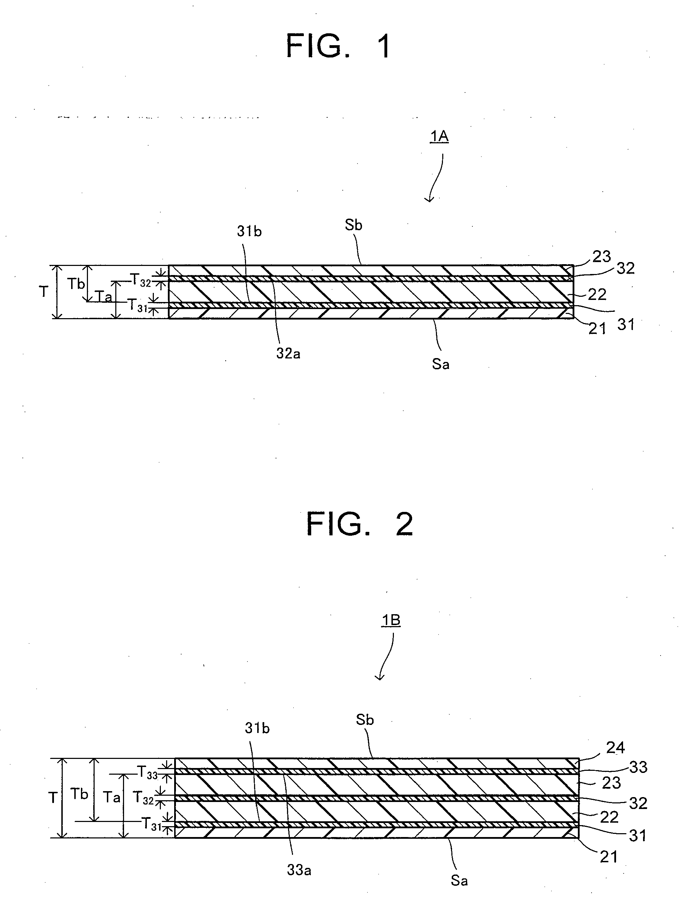

Hereinafter, an embodiment of the interlayer of the present invention will be described referring to the drawings, taking an example of an interlayer in a 5-layer constitution in which two core layers and three skin layers are alternately laminated in the order of the skin layer and the core layer, or a 7-layer constitution in which three core layers and four skin layers are alternately laminated in the order of the skin layer and the core layer. Fig. 1 is a cross-sectional view in an example of the embodiment of the interlayer in the 5-layer constitution. Fig. 2 is a cross-sectional view in an example of the embodiment of the interlayer in the 7-layer constitution.

An interlayer 1A illustrated in Fig. 1 has two principal surfaces Sa, Sb and a configuration in which five layers are laminated in the order of a skin layer 21, a core layer 31, a skin layer 22, a core layer 32, and a skin layer 23 from the principal surface Sa side toward the principal surface Sb side. The two core layers 31, 32 and the three skin layers 21, 22, 23 constituting the interlayer 1A have principal surfaces with substantially the same shape and same dimensions.

Here, in the description, "substantially the same shape and same dimensions" means having the same shape and same dimensions visually. Also in other cases, "substantially" means the same meaning as the above. Hereinafter, components constituting the interlayer 1A will be described.

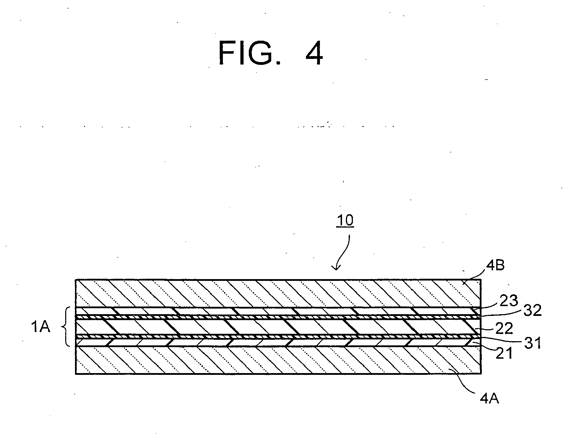

The interlayer for laminated glass of the present invention is used to be sandwiched between a pair of glass plates facing each other. Fig. 4 is a cross-sectional view of one example of the embodiment of the laminated glass using the interlayer 1A. The interlayer 1A is disposed between glass plates 4A and 4B, and has a function of bonding the glass plates 4A and 4B together to integrate them as laminated glass 10.

In the interlayer 1A, the storage moduluses G'c of the core layers 31 and 32 are less than 1.0 × 10⁶ Pa, and the storage moduluses G's of the skin layers 21, 22 and 23 are 1.0 × 10⁶ Pa or more. The core layers 31 and 32 and the skin layers 21, 22 and 23 are made of a resin appropriately selected from thermoplastic resins being a main material constituting the interlayer usually used for laminated glass, for each layer so as to obtain the storage modulus G'c or the storage modulus G's. The kind of the thermoplastic resin in use is not particularly limited as long as it can be adjusted to have the storage modulus G'c or the storage modulus G's.

The storage modulus G'c is preferably 0.6 × 10⁶ Pa or less, and more preferably 0.3 × 10⁶ Pa or less. When the storage modulus G'c is less than 1.0 × 10⁶ Pa, the desired foaming suppressing effect can be obtained while the sound insulating property is maintained in a range of practical use in the laminated glass using the interlayer of the present invention. The storage modulus G'c is preferably 0.8 × 10⁵ Pa or more, and more preferably 0.1 × 10⁶ Pa or more from the viewpoint of keeping the shape of the core layer itself.

The storage modulus G's is preferably 2.5 × 10⁶ Pa or more, and more preferably 5.0 × 10⁶ Pa or more. When the storage modulus G's is 1.0 × 10⁶ Pa or more, the desired foaming suppressing effect can be obtained while the sound insulating property is maintained in the range of practical use in the laminated glass. The storage modulus G's is preferably 4.0 × 10⁷ Pa or less from the viewpoint of penetration resistance.

From the viewpoint of maintaining the desired sound insulating property while enhancing the foaming suppressing effect, a value obtained by subtracting the storage modulus G'c from the storage modulus G's is preferably in a range of 2.0 × 10⁶ Pa to 3.0 × 10⁷ Pa, and more preferably 5.0 × 10⁶ Pa to 1.5 × 10⁷ Pa.

Concrete examples of the thermoplastic resin which can realize the storage modulus G'c in the core layer and the storage modulus G's in the skin layer include thermoplastic resins such as a polyvinyl acetal resin such as a polyvinyl butyral resin (PVB), a polyvinyl chloride resin (PVC), a saturated polyester resin, a polyurethane resin, an ethylene-vinyl acetate copolymer resin (EVA), an ethylene-ethyl acrylate copolymer resin, a cycloolefin polymer (COP) and the like. These thermoplastic resins can be adjusted to have the above-described storage modulus G'c or storage modulus G's by adjusting the amount of a plasticizer or the like. These thermoplastic resins may be used independently or two or more kinds of them may be used in combination.

Besides, the thermoplastic resins are selected according to use of the laminated glass and in consideration of balance among various properties such as transparency, weather resistance, adhesive strength, penetration resistance, impact energy absorbency, moisture resistance, heat insulating property and the like in addition to the conditions of the storage modulus G'c and the storage modulus G's in the core layer and the skin layer. From the above viewpoint, PVB, EVA, a polyurethane resin and the like are preferable as the thermoplastic resin constituting the core layer. Besides, PVB, EVA, a polyurethane resin and the like are preferable for the skin layer.

The storage moduluses G'c of the two or more core layers constituting the interlayer may be the same with or different from each other as long as the storage modulus G'c is in the above-described range in each core layer. Besides, when the interlayer has a plurality of skin layers, the storage moduluses G's of the skin layers may be the same with or different from each other as long as the storage modulus G's is in the above-described range in each skin layer. Further, the kinds of the thermoplastic resins constituting the core layer and the skin layer may be the same with or different from each other for each of the core layer and the skin layer. The interlayer preferably has a configuration in which the storage moduluses G'c and the kinds of the thermoplastic resins of the two or more core layers are the same, the storage moduluses G's and the kinds of the thermoplastic resins of the plurality of skin layers are the same when the plurality of skin layers are provided, and the kinds of the thermoplastic resins of the core layer and the skin layer are the same.

Note that the core layer and the skin layer constituting the interlayer of the present invention may individually be in a single-layer structure or a multilayer structure as long as each of them satisfies the storage modulus G'c or the storage modulus G's corresponding to the core layer or the skin layer. For example, the skin layer 21 in the interlayer 1A may be in the single-layer structure or the multilayer structure, and only needs to satisfy the storage modulus G's as a whole when it is in the multilayer structure. This also applies to the skin layers 22, 23 and the core layers 31, 32.

In the interlayer of the present invention, the value of the product of the core layer average thickness and the thickness of the whole interlayer is 0.15 or more. In the following description, the value of the product of the core layer average thickness and the thickness of the whole interlayer is also referred to as a "thickness product value X". The thickness product value X is preferably 0.17 or more, and more preferably 0.2 or more. Note that the thickness product value X is preferably 0.7 or less from the viewpoint of reducing the weight of the laminated glass. The thickness of the whole interlayer 1A in Fig. 1 is represented by T, the thicknesses of the core layer 31 and the core layer 32 are represented by T₃₁, T₃₂ respectively. The core layer average thickness in the interlayer 1A is (T₃₁ + T₃₂)/2, and the value of the product of the core layer average thickness and the thickness of the whole interlayer (thickness product value X) is expressed by T × (T₃₁ + T₃₂)/2.

Further, in the interlayer of the present invention, each of the distance from a surface, on the side of one principal surface of the interlayer, of the core layer that is farthest from the one principal surface of the interlayer to the one principal surface of the interlayer and the distance from a surface, on the side of the other principal surface of the interlayer, of the core layer that is farthest from the other principal surface of the interlayer to the other principal surface of the interlayer, is preferably 0.6 mm or more from the viewpoint of enhancing the foaming suppressing effect, and preferably 5.0 mm or less from the viewpoint of reducing the weight. Each of the above-described distances is more preferably 1.0 to 4.0 mm.

In the interlayer 1A, the distance from a surface 32a on the principal surface Sa side of the core layer 32 that is farthest from the principal surface Sa to the principal surface Sa is represented by Ta, and the distance from a surface 31b on the principal surface Sb side of the core layer 31 that is farthest from the principal surface Sb to the principal surface Sb is represented by Tb. Each of the distance Ta and the distance Tb is preferably 0.6 to 5.0 mm, and more preferably 1.0 to 4.0 mm as described above. The distance Ta and the distance Tb may be the same with or different from each other.

The thicknesses T₃₁, T₃₂ of the cores layer 31 and the core layer 32 are each preferably 0.05 to 0.2 mm, and more preferably 0.07 to 0.15 mm from the viewpoint of setting the distance Ta and the distance Tb to the above-described ranges in addition to the thickness product value X satisfying the above-described conditions in the interlayer 1A and improving the sound insulating property and reducing the weight when forming laminated glass. The thicknesses of the core layers 31, 32 may be the same with or different from each other.

The thicknesses of the skin layer 21, the skin layer 22, and the skin layer 23 are each preferably 0.15 to 1.1 mm, and more preferably 0.2 to 0.76 mm from the viewpoint of setting the distance Ta and the distance Tb to the above-described ranges in addition to the thickness product value X satisfying the above-described conditions in the interlayer 1A and improving the sound insulating property and reducing the weight when forming laminated glass. The thicknesses of the skin layer 21, the skin layer 22, and the skin layer 23 may be the same with or different from each other.

The thickness T of the interlayer 1A is the total of the thicknesses of the core layers 31, 32 and the skin layers 21, 22, 23, and is preferably 0.8 to 5.2 mm, and more preferably 1.7 to 4.0 mm from the viewpoint of setting the distance Ta and the distance Tb to the above-described ranges in addition to the thickness product value X satisfying the above-described conditions in the interlayer 1A and improving the sound insulating property and reducing the weight when forming laminated glass.

In the interlayer of the present invention, the value of the ratio of the thickness of the whole interlayer to the thickness of the core layer is preferably 11 or more and more preferably 15 or more, for all of the core layers. Taking the interlayer 1A as an example, each of the value of the ratio of the thickness T of the whole interlayer to the thickness T₃₁ of the core layer 31 expressed by T/T₃₁ and the value of the ratio of the thickness T of the whole interlayer to the thickness T₃₂ of the core layer 32 expressed by T/T₃₂ is preferably 11 or more. Each of T/T₃₁ and T/T₃₂ is more preferably 15 or more from the viewpoint of enhancing the foaming suppressing effect, and is preferably 50 or less from the viewpoint of reducing the weight of the laminated glass. T/T₃₁ and T/T₃₂ may be the same with or different from each other. Hereinafter, the value of the ratio of the thickness of the whole interlayer to the thickness of the core layer is simply referred also as a "thickness ratio value".

Here, Fig. 1 is a view illustrating one cross section vertical to the principal surfaces Sa, Sb of the interlayer 1A, and illustrating that the interlayer 1A is formed by lamination with a uniform thickness between one end portion and the other end portion of the interlayer. In the interlayer 1A, cross sections vertical to the principal surfaces Sa, Sb are all the same. More specifically, in the interlayer 1A, the thickness of each layer, the thickness T of the whole, the distance Ta, and the distance Tb are the same at every place within the principal surfaces.

Fig. 2 is a view schematically illustrating a cross section vertical to principal surfaces Sa, Sb of an interlayer 1B in which the skin layer and the core layer are alternately laminated, the number of core layers is three, and two outermost layers are composed of the skin layers. The interlayer 1B has the two principal surfaces Sa, Sb, and has a configuration in which seven layers are laminated in the order of a skin layer 21, a core layer 31, a skin layer 22, a core layer 32, a skin layer 23, a core layer 33, and a skin layer 24 from the principal surface Sa side toward the principal surface Sb side.

The thickness of the whole interlayer 1B in Fig. 2 is represented by T, the thicknesses of the core layer 31, the core layer 32, and the core layer 33 are represented by T₃₁, T₃₂, T₃₃ respectively. The core layer average thickness in the interlayer 1B is (T₃₁ + T₃₂ + T₃₃)/3. The thickness product value X in the interlayer 1B is expressed by T × (T₃₁ + T₃₂ + T₃₃)/3, and is 0.15 or more. The preferable value of the thickness product value X in the interlayer 1B is as described above.

In the interlayer 1B, the distance from a surface 33a on the principal surface Sa side of the core layer 33 that is farthest from the principal surface Sa to the principal surface Sa is represented by Ta, and the distance from a surface 31b on the principal surface Sb side of the core layer 31 that is farthest from the principal surface Sb to the principal surface Sb is represented by Tb. Each of the distance Ta and the distance Tb is preferably 0.6 to 5.0 mm, and more preferably 1.0 to 4.0 mm as described above. The distance Ta and the distance Tb may be the same with or different from each other.

The thickness T of the whole film, the thickness of the core layer and the thickness of the skin layer in the interlayer 1B may be the same as the thickness T of the whole film, the thickness of the core layer and the thickness of the skin layer in the interlayer 1A respectively including their preferable ranges. The thicknesses of the core layers may be the same with or different from each other, and the thicknesses of the skin layers may be the same with or different from each other.

In the interlayer 1B, each of the value of the ratio of the thickness T of the whole interlayer to the thickness T₃₁ of the core layer 31 expressed by T/T₃₁, the value of the ratio of the thickness T of the whole interlayer to the thickness T₃₂ of the core layer 32 expressed by T/T₃₂, and the value of the ratio of the thickness T of the whole interlayer to the thickness T₃₃ of the core layer 33 expressed by T/T₃₃ is preferably 11 or more, and more preferably 15 or more. Further, each of T/T₃₁, T/T₃₂, T/T₃₃ is preferably 50 or less as with T/T₃₁, T/T₃₂ in the interlayer 1A. These thickness ratio values may be the same with or different from each other.

### (Fabrication of the interlayer)

For fabrication of the core layer and the skin layer in the interlayer, a thermoplastic resin-containing composition containing the above-described thermoplastic resin as a main component is used. The thermoplastic resin-containing composition may contain one kind or two or more kinds of various additives such as an infrared absorbent, an ultraviolet absorbent, a fluorescer, an adhesion regulator, a coupling agent, a surface-active agent, an antioxidant, a heat stabilizer, a light stabilizer, a dehydrating agent, a defoaming agent, an antistatic agent, a flame retarder, a coloring agent (dye, pigment) and the like within the range not impairing the effect of the present invention and according to various purposes.

These additives may be entirely uniformly contained or partially contained in the core layer and the skin layer.

Note that regarding the additives contained for imparting additional functions to the core layer and the skin layer, such as the infrared absorbent, the ultraviolet absorbent, the fluorescer and the like, in particular, among the above-described additives, only one layer or two or more layers may contain the additives, for example, in the layers of the interlayer 1A composed of five layers in total of the core layers 31, 32 and the skin layers 21, 22, 23. Further, when two or more layers contain the additives, the two or more layers may contain the same kind of additive in the same amount or in different amounts, and may contain different additives respectively. In this case, in the case of the infrared absorbent, it is sometimes necessary to pay attention on adjustment of the additive amount and which layer the additive is to be added, so as not to affect the sensitivity of the infrared laser, communication and so on via laminated glass when the thermoplastic resin-containing composition is formed into the laminated glass.

The interlayer 1A is for example fabricated by preparing the core layers 31,32 and the skin layers 21, 22, 23 formed into sheet shapes from the thermoplastic resin-containing compositions suitable for them respectively such that the thicknesses of the layers and the relation between the thicknesses fall within the above-described ranges, laminating the obtained layers in the order of the skin layer 21, the core layer 31, the skin layer 22, the core layer 32, and the skin layer 23, and heating them under pressure. Alternatively, the interlayer 1A may be integrally fabricated by coextrusion. The fabrication method of laminating the layers and heating them under pressure is preferable. The fabrication conditions are appropriately selected depending on the kind of the thermoplastic resin. The interlayer 1B can be similarly fabricated.

The interlayer of the present invention has been described above using, as examples, the interlayers 1A, 1B in the case where two core layers are provided and the case where three core layers are provided. Also in an interlayer in the case where four or more core layers are provided, the core layer and the skin layer only need to be designed appropriately similarly to the above in consideration of the value of the product of the core layer average thickness and the thickness of the whole interlayer, the value of the ratio of the thickness of the whole interlayer to the thickness of the core layer, the distance from the surface, on the side of one principal surface of the interlayer, of the core layer that is farthest from the one principal surface of the interlayer to the one principal surface of the interlayer and the distance from the surface, on the side of the other principal surface of the interlayer, of the core layer that is farthest from the other principal surface of the interlayer to the other principal surface of the interlayer, the thickness of the whole interlayer, the thickness of each layer and so on.

The interlayer of the present invention may be the one in which each layer has a uniform thickness within the principal surface of the interlayer as in the interlayers 1A, 1B, or may be the one in which each layer has different thicknesses within the principal surface. In the case where each layer has different thicknesses within the principal surface, the thickness of the whole interlayer, the thickness of each layer, the value of the product of the core layer average thickness and the thickness of the whole interlayer, the value of the ratio of the thickness of the whole interlayer to the thickness of the core layer, the distance from the surface, on the side of one principal surface of the interlayer, of the core layer that is farthest from the one principal surface of the interlayer to the one principal surface of the interlayer and the distance from the surface, on the side of the other principal surface of the interlayer, of the core layer that is farthest from the other principal surface of the interlayer to the other principal surface of the interlayer, are designed so that their values measured at any place located on a center line in the traverse direction (TD) of the interlayer fall within the ranges when each layer has a uniform thickness within the principal surface of the interlayer, more specifically, within the ranges illustrated in the above-described interlayers 1A, 1B.

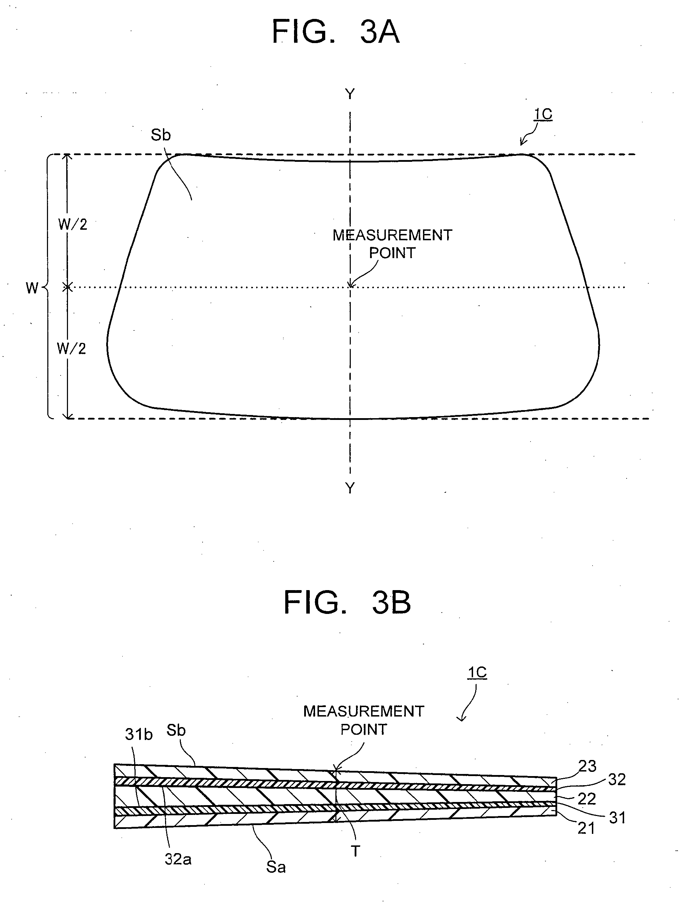

The traverse direction (TD) of the interlayer is the traverse direction (width direction of the interlayer) (TD) to a machine direction (length direction of the interlayer) (MD) during manufacture of the interlayer manufactured in a long size. The center line in the traverse direction (TD) of the interlayer is a straight line parallel to the machine direction (MD) during manufacture of the interlayer bisecting the length in the traverse direction (TD) of the interlayer, and the measurement point for the thickness of the interlayer and each layer may be located at any point on the center line. The measurement point for the thickness of the interlayer and each layer will be described below taking, as an example, an interlayer 1C illustrated in Fig. 3A and Fig. 3B. Note that the interlayer 1C illustrated in Fig. 3A and Fig. 3B is for, but not limited to, a windshield. The position of the measurement point can be the same as in the following example also, for example, in interlayers for laminated glass for rear glass and for side glass.

Fig. 3A is a front view in another example of the embodiment of the interlayer of the present invention composed of a 5-layer laminated film, and Fig. 3B is a cross-sectional view taken along a line Y-Y of the interlayer illustrated in Fig. 3A. The interlayer 1C illustrated in Fig. 3A is, for example, an interlayer used for laminated glass for front glass of an automobile. In Fig. 3A, the upper side of the interlayer 1C is the side to be attached to the automobile as the upper side of the front glass when it is formed into laminated glass. Hereinafter, an edge on the upper side of the interlayer 1C is referred to as an upper edge, and an edge on the lower side of the interlayer 1C is referred to as a lower edge. In the cross-sectional view of the interlayer 1C illustrated in Fig. 3B, the left side is the upper edge side, and the right side is the lower edge side.

The interlayer 1C has two principal surfaces Sa, Sb having substantially the same shape and same dimensions. Fig. 3A is a front view of the interlayer 1C viewed from the principal surface Sb side. As illustrated in Fig. 3A, the principal surface Sb of the interlayer 1C is in a substantially trapezoidal shape having the lower edge longer than the upper edge. As illustrated in Fig. 3B, the interlayer 1C is an interlayer having a cross section in a so-called wedge shape gradually decreasing in thickness from the upper edge toward the lower edge. The laminated constitution of the interlayer 1C is a configuration in which five layers are laminated in the order of a skin layer 21, a core layer 31, a skin layer 22, a core layer 32, and a skin layer 23 from the principal surface Sa side toward the principal surface Sb side. All of the skin layer 21, the core layer 31, the skin layer 22, the core layer 32, and the skin layer 23 are gradually reduced in thickness at the same rate from the upper edge toward the lower edge.

Usually, in such an interlayer, the thickness of the interlayer and each of the layers constituting the interlayer is fixed from one end toward the other end of the upper edge, and the thickness of the interlayer and each of the layers constituting the interlayer is fixed from one end toward the other end of the lower edge.

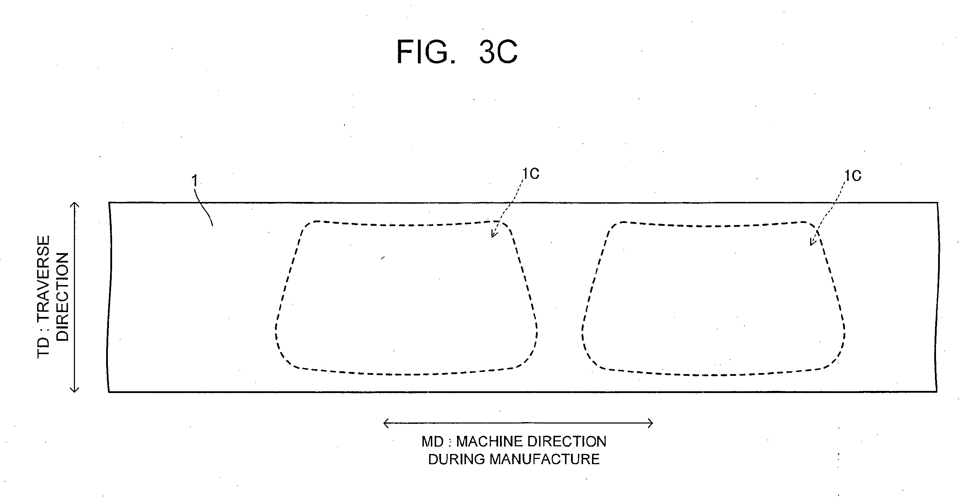

The measurement point for the thickness of each of the layers in the interlayer 1C is illustrated in Fig. 3A, Fig. 3B. Two broken lines in contact with points located on the outermost sides of the upper edge and the lower edge respectively illustrated in Fig. 3A are straight lines for deciding the measurement point, parallel to the machine direction (length direction of the interlayer) (MD) during manufacture of a long interlayer 1 used for obtaining the interlayer 1C, and a dotted line indicates the center line in the traverse direction (TD). Fig. 3C is a view of one example illustrating the process of fabricating the interlayer 1C in a substantially trapezoidal shape from the long interlayer 1.

When the distance between the two straight lines for deciding the measurement point along the machine direction (length direction of the interlayer) (MD) during manufacture of the interlayer 1 is represented by W in Fig. 3A, the center line in the traverse direction (TD) is located at equal distances (W/2) from the above-described two straight lines. In the cross section of the interlayer 1 along the center line, each layer has a uniform thickness within the cross section, for example, as in the cross section illustrated in Fig. 1. Accordingly, the measurement point for the thickness of the interlayer and each layer may be any point on the center line. In the interlayer of the present invention, the thickness of the whole interlayer, the thickness of each of the layers constituting the interlayer, and the relation between them satisfy the conditions of the present invention at the measurement point as described above. Meanwhile, in the case where the interlayer is long as illustrated in Fig. 3C, a portion thereof corresponding to the position where the interlayer 1C is cut out only needs to satisfy the conditions of the present invention when the thickness of the interlayer and each layer are measured by the above-mentioned manner.

In the case where the thicknesses of each layer and the interlayer are different within the principal surface of the interlayer, the thickness of each layer at any point on the center line in the traverse direction (TD) of the interlayer as illustrated in Fig. 3A, Fig. 3C only needs to satisfy the conditions of the present invention. In the case of the interlayer 1C, the thickness of each layer at any point on the center line drawn to be located at equal distances from the upper edge and the lower edge of the interlayer 1C as illustrated in Fig. 3A only needs to satisfy the conditions of the present invention. Note that in the case where the upper edge and the lower edge of the interlayer are curved lines as with the interlayer 1C or have irregularities, it is only necessary to find the center line by using, as the straight lines for deciding the measurement point, the two straight lines parallel to the machine direction (MD) during manufacture of the interlayer drawn with reference to the point located on the outermost sides on the upper edge and the lower edge as illustrated in Fig. 3A.

The position of the measurement point when the interlayer 1C is cut along the line Y-Y is illustrated in Fig. 3A and Fig. 3B. In Fig. 3B, the thickness T of the whole interlayer 1C measured at the measurement point is illustrated. Though not illustrated, the thickness of the core layer 31 at the measurement point is represented by T₃₁, the thickness of the core layer 32 is represented by T₃₂, the distance from a surface 32a on the principal surface Sa side of the core layer 32 that is farthest from the principal surface Sa to the principal surface Sa is represented by Ta, and the distance from a surface 31b on the principal surface Sb side of the core layer 31 that is farthest from the principal surface Sb to the principal surface Sb is represented by Tb.

The core layer average thickness in the interlayer 1C is (T₃₁ + T₃₂)/2. The thickness product value X in the interlayer 1C is expressed by T × (T₃₁ + T₃₂)/2, and is 0.15 or more. The preferable value of the thickness product value X in the interlayer 1C is as described above. In the interlayer 1C, each of the distance Ta and the distance Tb is preferably 0.6 to 5.0 mm, and more preferably 1.0 to 4.0 mm as described above. The distance Ta and the distance Tb may be the same with or different from each other. The thickness T of the whole interlayer and the thickness of each layer in the interlayer 1C are the thicknesses at any measurement point on the center line, and the same thicknesses as in the interlayer 1A are applicable.

In the interlayer 1C, each of T/T₃₁ and T/T₃₂ is preferably 11 or more, and more preferably 15 or more. Further, each of T/T₃₁, T/T₃₂ is 50 or less as with T/T₃₁, T/T₃₂ in the interlayer 1A. These thickness ratio values may be the same with or different from each other.

In the interlayer for laminated glass, generally, the interlayer is sometimes used while partially extended according to the shape of the principal surface of the laminated glass. In this case, the thickness of the interlayer at the extended part becomes smaller than the thickness of the interlayer at a not-extended part. Also in this case, the thickness of the whole interlayer, the thickness of each layer, the value of the product of the core layer average thickness and the thickness of the whole interlayer, the value of the ratio of the thickness of the whole interlayer to the thickness of the core layer, the distance from the surface, on the side of one principal surface of the interlayer, of the core layer that is farthest from the one principal surface of the interlayer to the one principal surface of the interlayer and the distance from the surface, on the side of the other principal surface of the interlayer, of the core layer that is farthest from the other principal surface of the interlayer to the other principal surface of the interlayer, are designed so that their values measured at any point located on the center line in the traverse direction (TD) of the interlayer fall within the ranges when each layer has a uniform thickness within the principal surface of the laminated glass, more specifically, within the ranges illustrated in the interlayers 1A, 1B, as in the case of the interlayer having the cross section in the wedge shape.

### (Another layer)

The interlayer in the embodiment may have, as another layer, a functional film between the layers of the interlayer within the range not impairing the effect of the present invention. Examples of the functional film include an infrared cut film and so on. As the infrared, cut film, concretely, the one in which a conventionally known infrared reflective film such as a single-layer or multilayer infrared reflective film having a film thickness of about 100 to 500 nm and including a dielectric multilayer film, a liquid crystal alignment film, an infrared reflector-containing coating film, and a metal film is formed as an infrared reflective film on a supporting film such as a PET film having a thickness of about 25 to 200 µm or the like, can be exemplified. As the infrared cut film, a dielectric multilayer film made by laminating resin films different in refractive index and having a total film thickness of about 25 to 200 µm and the like can be exemplified. When the interlayer of the present invention has the functional film, the thickness of the whole interlayer, the distance from the surface, on the side of one principal surface of the interlayer, of the core layer that is farthest from the one principal surface of the interlayer to the one principal surface of the interlayer, and the distance from the surface, on the side of the other principal surface of the interlayer, of the core layer that is farthest from the other principal surface of the interlayer to the other principal surface of the interlayer, are the thickness and the distances including the functional film.

### [Laminated glass]

The laminated glass of the present invention includes a pair of glass plates facing each other, and the interlayer of the present invention sandwiched between the pair of glass plates. The laminated glass of the present invention is laminated glass in which generation and increase of area of air bubbles due to an interlayer, in particular, formation and growth of Ice Flower-shaped foam are suppressed by using the interlayer of the present invention.

The laminated glass of the present invention can be configured similarly to ordinary laminated glass, except that the interlayer of the present invention is used as its interlayer. Fig. 4 is a cross-sectional view of an example of the embodiment of the laminated glass using the interlayer 1A illustrated in Fig. 1. The laminated glass 10 has the pair of the glass plates 4A and 4B facing each other and the interlayer 1A sandwiched between the glass plates 4A and 4B.

### (Glass plate)

Each of the plate thicknesses of the pair of the glass plates 4A and 4B in the laminated glass 10 can be appropriately selected depending on the use of the laminated glass 10, generally can be 0.1 to 10 mm, and is preferably 0.3 to 2.5 mm from the viewpoint of the sound insulating property and reduction in weight.

The plate thicknesses of the pair of the glass plates 4A and 4B may be the same with or different from each other. In the case where the plate thicknesses of the pair of the glass plates 4A and 4B are different, it is preferable that the glass plate located inside when the laminated glass 10 is installed in a window or the like, for example, on the vehicle inner side when it is the window glass of an automobile, or on the indoor side when it is the window glass of a building, is smaller than the plate thickness of the glass plate located outside.

For example, in the laminated glass 10, when the glass plate located on the inside in use is the glass plate 4A, the plate thickness of the glass plate 4A is preferably 0.4 to 1.6 mm, and more preferably 0.6 to 1.5 mm. Further, the plate thickness of the glass plate 4A is preferably smaller than the plate thickness of the glass plate 4B. The difference between the plate thickness of the glass plate 4A and the plate thickness of the glass plate 4B is preferably 0.3 to 1.5 mm, and more preferably 0.5 to 1.3 mm. Further, in this case, the glass plate 4B is the glass plate located on the outside, and preferably has a plate thickness of 1.6 to 2.5 mm and more preferably 1.7 to 2.1 mm.

The glass plate located on the outside having a thickness larger than that of the glass plate located on the inside in use of the laminated glass is preferable in terms of flying stone impact resistance. In particular, the plate thickness on the outside is preferably 1.3 mm or more.

Examples of the material of the glass plates 4A and 4B used for the laminated glass 10 include transparent inorganic glass and organic glass (resin). As the inorganic glass, ordinary soda lime glass (also referred to as soda lime silicate glass), aluminosilicate glass, borosilicate glass, non-alkali glass, quartz glass and the like are used without any particular limitation. Among them, soda lime glass is particularly preferable. Its forming method is also not particularly limited and, for example, float plate glass formed by a float method or the like may be used. Further, it is preferable that a reinforcing process such as an air-cooling and tempering or a chemical strengthening is applied to the glass plates 4A and 4B.

Examples of the organic glass (resin) include a polycarbonate resin, a polystyrene resin, an aromatic polyester resin, an acrylic resin, a polyester resin, a polyarylate resin, a polycondensation product of halogenated bisphenol A and ethylene glycol, an acrylic urethane resin, a halogenated aryl group-containing acrylic resin and the like. Among them, the polycarbonate resin such as an aromatic polycarbonate resin and the acrylic resin such as a polymethyl methacrylate-based acrylic resin are preferable, and the polycarbonate resin is more preferable. Further, among polycarbonate resins, a bisphenol A-based polycarbonate resin is particularly preferable. Note that the glass plate may be composed containing two or more kinds of the above-described resins.

The glass plates 4A and 4B may be glass plates having infrared absorbency and/or ultraviolet absorbency impart by containing an infrared absorbent and/or an ultraviolet absorbent in the above-described inorganic glass or organic glass (resin). As the glass constituting such a glass plate, green glass, ultraviolet-absorbing green glass (UV green glass), or the like can be used. Note that the UV green glass refers to ultraviolet-absorbing green glass containing 68 mass% or more and 74 mass% or less of SiO₂, 0.3 mass% or more and 1.0 mass% or less of Fe₂O₃, and 0.05 mass% or more and 0.5 mass% or less of FeO, and having an ultraviolet transmittance of a wavelength of 350 nm of 1.5 % or less and a minimum value of a transmittance in a region of 550 nm or more and 1700 nm or less.

As the above-described glass, a colorless and transparent material with no coloring component added thereto may be used, or a colored and transparent material colored like the above-described green glass within the range not impairing the effect of the present invention may be used. Moreover, one kind of glass may be used or two or more kinds of glass may be used in combination, and for example, a laminated substrate may be made by laminating two or more layers. Though depending on the application place of the laminated glass, the inorganic glass is preferable as glass.

The pair of glass plates 4A and 4B used for the laminated glass 10 may be constituted with different kinds of materials each other. However, it is preferable that the pair of glass plates 4A and 4B made of the same material. The shape of the glass plates 4A and 4B may be a flat plate, or alternatively may entirely or partially have a curvature. A coating may be applied onto an exposed surface of the glass plates 4A and 4B, which is exposed to an atmosphere, to impart a water repellent function, a hydrophilic function, an antifogging function or the like. Furthermore, a functional coating normally including a metal layer such as a low emissivity coating, an infrared shielding coating, a conductive coating or the like may be applied onto the opposing surfaces of the glass plate 4A and 4B facing each other.

Note that in the case where the opposing surfaces of the glass plates 4A and 4B have the above-described functional coatings, the skin layer 21 and the skin layer 23 of the interlayer 1A are configured to be in contact with the functional coatings on the opposing surfaces of the glass plates 4A and 4B respectively.

The laminated glass of the present invention preferably has a loss factor of 0.2 or more at a primary resonance point measured in a frequency domain of 0 to 10000 Hz under the condition of a temperature of 20°C. Hereinafter, the primary resonance point refers to a primary resonance point measured in a frequency domain of 0 to 10000 Hz under the condition of a temperature 20°C unless otherwise stated.

Note that the loss factor at the primary resonance point can be measured by the central exciting method compliant with ISO_PAS_16940. As a measurement apparatus for the loss factor by the central exciting method, for example, Central Exciting Method Measurement Systems (MA-5500, DS-2000 (brand name)) manufactured by ONO SOKKI Co., Ltd. can be exemplified. The frequency domain of the primary resonance point in the laminated glass of the present invention is about 0 to 300 Hz. The laminated glass of the present invention, having a loss factor at the primary resonance point of 0.2 or more, can sufficiently insulate sound in a relatively low frequency domain, such as engine sound, vibration sound of tires and the like of an automobile. Further, the laminated glass of the present invention, having a loss factor at the primary resonance point of 0.2 or more, can efficiently insulate sound from a low frequency domain to a high frequency domain because the loss factors at higher-order resonance points such as a secondary resonance point to a seventh resonance point are likely to be relatively high, for example, 0.2 or more.

In the laminated glass of the present invention, the loss factor at the primary resonance point is more preferably 0.3 or more. Note that, for example, in laminated glass in a curved shape, the loss factor is measured by fabricating laminated glass using flat glass plates to have the configuration equivalent to that of the laminated glass in the curved shape.

Further, the laminated glass of the present invention preferably has a three point bend rigidity of 100 N/mm or more. The three point bend rigidity is rigidity obtained by a three point bend test, and can be measured, for example, by a compression tensile testing machine. The three point bend rigidity is particularly preferably 120 N/mm or more. The three point bend rigidity of the laminated glass of 100 N/mm or more is preferable because it is the rigidity at a level not inhibiting opening and closing the window glass during high-speed running of a vehicle.

The laminated glass of the present invention preferably has a sound transmission loss of 35 dB or more in a coincidence region measured compliant with SAE J1400, and particularly preferably 42 dB or more. The laminated glass having a sound transmission loss of 35 dB or more can be evaluated to be excellent in sound insulating property.

### (Another layer)

The laminated glass in the embodiment may have another layer within the range not impairing the effect of the present invention. As another layer, for example, a black ceramic layer arranged in a band shape at a part or all of a peripheral edge portion of the laminated glass for the purpose of hiding a portion attached to a frame body or the like of the laminated glass, a wiring conductor and so on. The width of the black ceramic layer is appropriately selected according to the use of the laminated glass. For example, when the laminated glass is roof glass used for a ceiling part of an automobile, the black ceramic layer is usually formed in a frame shape having a width of about 10 to 100 mm. Besides, when the laminated glass is used for side glass of the automobile, the black ceramic layer is sometimes formed in a band shape usually having a width of about 30 to 200 mm.

The black ceramic layer can be formed in the above-described shape by an ordinary method on the principal surface on the atmosphere side or the interlayer side of any one of the pair of glass plates included in the laminated glass. The formation place of the black ceramic layer is appropriately selected according to the use.

Note that "black" of the black ceramic layer does not mean black defined by three attributes of color or the like, and includes a range where it is recognizable as black adjusted to inhibit visible light from being transmitted to an extent capable of hiding at least a portion required to be hidden. Accordingly, in the black ceramic layer, the black may have gradation as necessary within a range in which the black can fulfill the function, and the black may be slightly different from the black defined by three attributes of color. From the same viewpoint, the black ceramic layer may be configured to be an integrated film in which the whole layer continues or may be composed of dot patterns or the like in which the percentage of visible light transmission can be easily adjusted by the setting of the shape, arrangement or the like, according to the place where the black ceramic layer is arranged.

Further, the laminated glass of this embodiment may have a shade region. When the laminated glass is laminated glass for a vehicle, in particular, a windshield, a band-shaped shade region is sometimes formed which is colored in green or blue for improvement of antiglare property, heat shielding property and so on. The shade region is sometimes provided on the surface of the glass plate and often formed by coloring the interlayer in a band shape. On the other hand, there is a legal visual field area where the visible light transmittance should be set to a predetermined value or more (for example, 70% or more), so that the shade region of the windshield is usually arranged on an upper portion of the windshield that is outside the visual field area.

### (Manufacture of laminated glass)

The laminated glass in the embodiment of the present invention can be manufactured by a generally used publicly-known technique. In the laminated glass 10, the interlayer 1A in which the skin layer 21, the core layer 31, the skin layer 22, the core layer 32, and the skin layer 23 are laminated in this order is fabricated as described above or the interlayer 1A is fabricated by coextrusion in forming the layers, and the interlayer 1A is inserted in between the pair of glass plates 4A and 4B to prepare a laminated glass precursor being laminated glass before compression bonding in which the glass plate 4A, the interlayer 1A (however, the skin layer 21 is located on the glass plate 4A side), and the glass plate 4B are laminated in this order. Also in the case of having another layer, the glass plates and the layers are laminated in the similar lamination order to that of similarly obtained laminated glass to prepare a laminated glass precursor.

The laminated glass precursor is put in a vacuum bag such as a rubber bag, the vacuum bag is connected to an exhaust system, and bonding of them is performed at a temperature of about 70 to 110°C while pressure-reduction suction (deaeration) is performed so that a pressure in the vacuum bag becomes a pressure reduction degree of about -65 to -100 kPa, whereby the laminated glass in the embodiment can be obtained. Further, for example, the laminated glass precursor is subjected to compression bonding of heating and pressurizing it under conditions of 100 to 140°C and a pressure of 0.6 to 1.3 MPa, whereby laminated glass superior in durability can be obtained.

The use of the laminated glass of the present invention is not particularly limited. The laminated glass can be used as laminated glass for building, laminated glass for an automobile and the like, and can attain more prominent sound insulating effect when it is used as the laminated glass for an automobile. Further, the reduction in weight can be attained in preferable aspect.

Note that the laminated glass of the present invention, when used for an automobile, preferably has a visible light transmittance of 70% or more measured according to JIS R3212 (1998), and more preferably 74% or more. The Tts (Total solar energy transmitted through a glazing) measured according to ISO13837-2008 is preferably 66% or less, and more preferably 60% or less.

### EXAMPLES

Hereinafter, the present invention will be described in more detail using examples. The present invention is not limited to the embodiments and examples described below. Examples 1, 2 are examples, and Examples 3 to 6 are comparative examples.

### [Example 1 to Example 6]

The interlayer in the laminated constitution listed in Table 1 was manufactured in each example. Note that for every skin layer in the interlayer, the same PVB sheet (storage modulus G's; 1.9 × 10⁷ Pa) except the thickness was used. Besides, as every core layer, the PVB sheet (storage modulus G's; 0.1 × 10⁶ Pa) having a thickness of 0.1 mm was used. Note that in Table 1, "-" indicates that there is no relevant layer. The each interlayer in Example 1, 5 and 6 is the interlayer in the same laminated constitution as that of the interlayer 1A illustrated in Fig. 1. The interlayer in Example 2 is the interlayer in the same laminated constitution as that of the interlayer 1B illustrated in Fig. 2. The each interlayer in Example 3 and 4 is the interlayer in a three-layer structure in a configuration that one core layer is sandwiched between two skin layers. In every example, the principal surface of the interlayer on the skin layer 21 side is Sa, and the principal surface of the interlayer opposite thereto is Sb.

Note that the interlayer in each example was manufactured by laminating the PVB sheets constituting the layers and pressing them by a hot press forming machine at 150°C, for 300 seconds, at a press pressure of 50 kg/cm². The thickness of each layer is the thickness after the pressing.

Table 1 lists the thickness of the layers of the interlayer obtained in each example, the thickness T of the whole interlayer, the number of core layers, the core layer average thickness, the value of the product of the core layer average thickness and the thickness T of the whole interlayer (thickness product value X), the value of the ratio of the thickness of the whole interlayer to the thickness of each core layer T/T₃₁, T/T₃₂, T/T₃₃, the distance Ta from the surface on the principal surface Sa side of the core layer that is farthest from the principal surface Sa to the principal surface Sa and the distance Tb from the surface on the principal surface Sb side of the core layer that is farthest from the principal surface Sb to the principal surface Sb.

### (Evaluation)

The laminated glass for evaluation was fabricated as follows using the interlayer obtained in the above, its sound insulating property was evaluated, and its foaming suppressing effect was evaluated by subjecting the laminated glass to a foaming test. The results are listed on the lowermost columns in Table 1.

### <Fabrication of laminated glass >

The interlayer fabricated as described above in each example was laminated to be sandwiched between a pair of glass plates and made into a laminate, and the laminate was put in a vacuum bag and subjected to bonding at 110°C while deaeration was being performed to bring the inside of the vacuum bag into a pressure reduction degree of-67 kPa, and then subjected to further compression bonding under conditions of a temperature of 140°C and a pressure of 1.3 MPa, whereby the laminated glass was obtained. Note that all of the glass plates in use were glass plates (300 mm × 300 mm, 2 mm thick) made of soda lime glass, and the interlayer was used for lamination with the principal surface thereof made into the same size as that of the glass plate in advance.

### (1) Foaming test

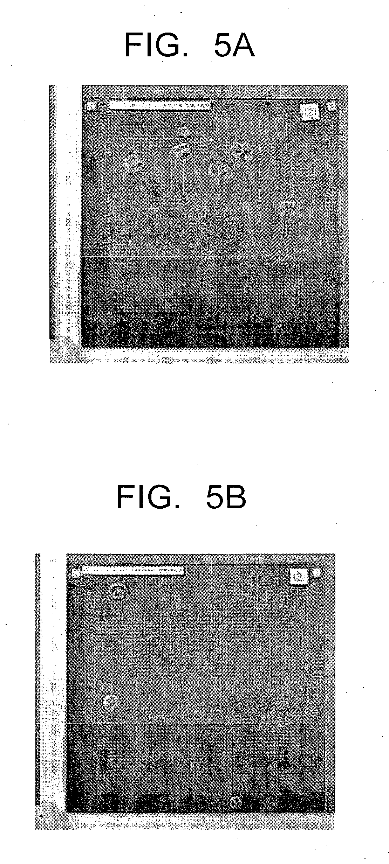

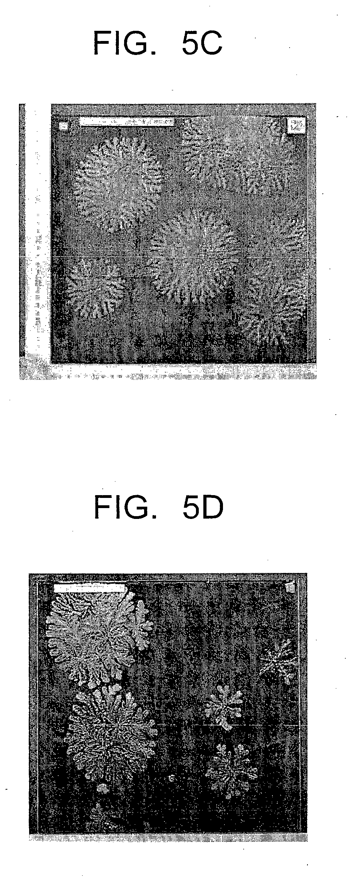

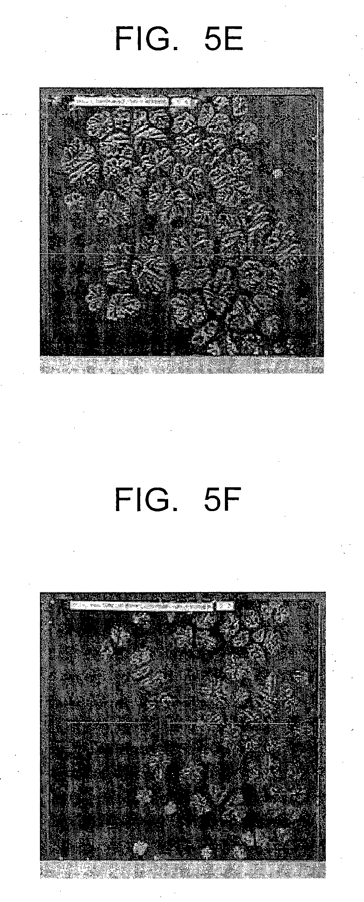

The laminated glass obtained in the above was put into an oven at 80°C and retained for 140 hours, and then taken out of the oven, and its foaming area was measured. The measurement of the foaming area was performed by photographing the laminated glass after the foaming test from the front with a digital camera, and calculating the area of the foaming portion using image-processing software image J (version 1.49). Note that the area of the foaming portion was concretely calculated by visually deciding the contour of the foaming portion and mechanically measuring the area of a portion surrounded by the contour. Photographs of the laminated glasses using the interlayers in Example 1 to Example 6 after the foaming test are shown in Fig. 5A to Fig. 5F respectively.

### (2) Sound insulating property (loss factor)

For the laminated glasses obtained in the above, the loss factor at the primary resonance point in a frequency of 0 to 10000 Hz at a temperature 20°C was measured complying with ISO_PAS_16940 using Central Exciting Method Measurement Systems (MA-5500, DS-2000) manufactured by ONO SOKKI Co., Ltd.

**[Table 1]**

| Example | | 1 | 2 | 3 | 4 | 5 | 6 |
|---|---|---|---|---|---|---|---|
| Laminated constitution of interlayer/each layer thickness [mm] | Skin layer21 | 0.35 | 0.35 | 0.35 | 0.35 | 0.20 | 0.30 |
| | Core layer31 (T₃₁) | 0.10 | 0.10 | 0.10 | 0.10 | 0.10 | 0.10 |
| | Skin layer22 | 0:70 | 0.70 | 0.35 | 1.15 | 0.40 | 0.10 |
| | Core layer32(T₃₂) | 0.10 | 0.10 | - | - | 0.10 | 0.10 |
| | Skin layer23 | 0.35 | 0.70 | - | - | 0.20 | 0.30 |
| | Core layer33(T₃₃) | - | 0.10 | - | - | - | - |
| | Skin layer24 | - | 0.35 | - | - | - | - |
| | Total thickness(T) | 1.6 | 2.4 | 0.8 | 1.6 | 1.0 | 0.9 |
| Interlayer characteristics | Core layer average thickness [mm] | 0.10 | 0.10 | 0.10 | 0.10 | 0.10 | 0.10 |
| | Thickness product value X | 0.16 | 0.24 | 0.08 | 0.16 | 0.10 | 0.09 |
| | T/T₃₁ | 16 | 24 | 8 | 16 | 10 | 9 |
| | T/T₃₂ | 16 | 24 | - | - | 10 | 9 |
| | T/T₃₃ | - | 24 | - | - | - | - |
| | Number of core layers | 2 | 3 | 1 | 1 | 2 | 2 |
| | Distance Ta[mm] | 1.15 | 1.95 | 0.35 | 0.35 | 0.7 | 0.5 |
| | Distance Tb[mm] | 1.15 | 1.95 | 0.35 | 1.15 | 0.7 | 0.5 |
| Evaluation | Post-foaming test photograph | Fig.5A | Fig.5B | Fig.5C | Fig.5D | Fig.5E | Fig.5F |
| | Foaming area [cm²] | 23 | 6 | 426 | 265 | 381 | 201 |
| | Loss factor (primary resonance point) | 0.39 | 0.47 | 0.27 | 0.30 | 0.38 | 0.34 |

From Table 1 and Fig. 5A to Fig. 5F, the laminated glasses using the interlayers in the examples clearly have sound insulating property and are excellent in foaming suppressing effect because of a small foaming area and no formation of Ice Flower-shaped foam.

## Claims

1. An interlayer for laminated glass comprising alternately laminated at least one skin layer and two or more core layers, the skin layer having a storage modulus of 1.0 × 10⁶ Pa or more measured by a dynamic viscoelasticity test under conditions of a frequency of 1 Hz, a swing angle gamma of 0.01% and a temperature of 20°C, and the core layers each having a storage modulus of less than 1.0 × 10⁶ Pa measured by same manner as the skin layer,
wherein a value of a product of a value obtained by averaging thicknesses (mm) of the respective core layers and a thickness (mm) of the whole interlayer for laminated glass is 0.15 or more,
wherein two outermost layers of the interlayer for laminated glass are composed of the skin layers.

2. The interlayer for laminated glass according to claim 1,
wherein both of a distance from a surface on a side of one principal surface of the interlayer for laminated glass of the core layer being farthest from the one principal surface to the one principal surface of the interlayer, and
a distance from a surface on a side of another principal surface of the interlayer for laminated glass of the core layer being farthest from the another principal surface to the another principal surface of the interlayer are 0.6 to 5.0 mm.

3. The interlayer for laminated glass according to claim 1 or 2,
wherein a thickness of the whole interlayer for laminated glass is 0.8 to 5.2 mm.

4. The interlayer for laminated glass according to any one of claims 1 to 3, comprising three or more core layers.

5. The interlayer for laminated glass according to any one of claims 1 to 4,
wherein a value obtained by subtracting the storage modulus of the core layer from the storage modulus of the skin layer is in a range of 2.0 × 10⁶ Pa to 3.0 × 10⁷ Pa.

6. The interlayer for laminated glass according to any one of claims 1 to 5,
wherein a value of a ratio of the thickness of the whole interlayer for laminated glass to the thickness of each core layer is 11 or more.

7. The interlayer for laminated glass according to any one of claims 1 to 6,
wherein a value of a ratio of the thickness of the whole interlayer for laminated glass to the thickness of each core layer is 15 or more.

8. The interlayer for laminated glass according to any one of claims 1 to 7,
wherein each of the distance from a surface, on the side of one principal surface of the interlayer, of the core layer that is farthest from the one principal surface of the interlayer to the one principal surface of the interlayer and the distance from a surface, on the side of the other principal surface of the interlayer, of the core layer that is farthest from the other principal surface of the interlayer to the other principal surface of the interlayer, is 0.6 mm or more.

9. A laminated glass comprising: a pair of glass plates facing each other; and the interlayer for laminated glass according to any one of claims 1 to 8 sandwiched between the pair of glass plates.

## Patentansprüche

1. Zwischenschicht für Verbundglas, umfassend abwechselnd laminiert mindestens eine Hautschicht und zwei oder mehr Kernschichten, wobei die Hautschicht einen Speichermodul von 1,0 x 10⁶ Pa oder mehr aufweist, gemessen durch einen dynamischen Viskoelastizitätstest unter Bedingungen einer Frequenz von 1 Hz, einem Schwingungswinkel gamma von 0,01% und einer Temperatur von 20°C, und die Kernschichten jeweils einen Speichermodul von weniger als 1,0 x 10⁶ Pa aufweisen, gemessen auf die gleiche Weise wie die Hautschicht,
wobei ein Wert eines Produkts aus einem Wert, der durch Mittelung der Dicken (mm) der jeweiligen Kernschichten erhalten wird, und einer Dicke (mm) der gesamten Zwischenschicht für Verbundglas 0,15 oder mehr beträgt,
wobei die beiden äußersten Schichten der Zwischenschicht für Verbundglas aus den Hautschichten bestehen.

2. Zwischenschicht für Verbundglas nach Anspruch 1,
wobei sowohl ein Abstand von einer Oberfläche auf einer Seite einer Hauptfläche der Zwischenschicht für Verbundglas der Kernschicht, die am weitesten von der einen Hauptfläche entfernt ist, zu der einen Hauptfläche der Zwischenschicht, als auch
ein Abstand von einer Oberfläche auf einer Seite einer anderen Hauptoberfläche der Zwischenschicht für Verbundglas der Kernschicht, die am weitesten von der anderen Hauptoberfläche entfernt ist, zu der anderen Hauptoberfläche der Zwischenschicht 0,6 bis 5,0 mm beträgt.

3. Zwischenschicht für Verbundglas nach Anspruch 1 oder 2,
wobei eine Dicke der gesamten Zwischenschicht für Verbundglas 0,8 bis 5,2 mm beträgt.

4. Zwischenschicht für Verbundglas nach einem der Ansprüche 1 bis 3, umfassend drei oder mehr Kernschichten.

5. Zwischenschicht für Verbundglas nach einem der Ansprüche 1 bis 4,
wobei ein Wert, der durch Subtraktion des Speichermoduls der Kernschicht von dem Speichermodul der Hautschicht erhalten wird, in einem Bereich von 2,0 × 10⁶ Pa bis 3,0 × 10⁷ Pa liegt.

6. Zwischenschicht für Verbundglas nach einem der Ansprüche 1 bis 5,
wobei ein Wert eines Verhältnisses der Dicke der gesamten Zwischenschicht für Verbundglas zu der Dicke jeder Kernschicht 11 oder mehr beträgt.

7. Zwischenschicht für Verbundglas nach einem der Ansprüche 1 bis 6,
wobei ein Wert eines Verhältnisses der Dicke der gesamten Zwischenschicht für Verbundglas zu der Dicke jeder Kernschicht 15 oder mehr beträgt.

8. Zwischenschicht für Verbundglas nach einem der Ansprüche 1 bis 7,
wobei jeder der Abstände von einer Oberfläche auf der Seite einer Hauptfläche der Zwischenschicht der Kernschicht, die am weitesten von der einen Hauptfläche der Zwischenschicht entfernt ist, zu der einen Hauptfläche der Zwischenschicht und der Abstand von einer Oberfläche auf der Seite der anderen Hauptfläche der Zwischenschicht der Kernschicht, die am weitesten von der anderen Hauptfläche der Zwischenschicht entfernt ist, zu der anderen Hauptfläche der Zwischenschicht 0,6 mm oder mehr beträgt.

9. Verbundglas, umfassend: ein Paar von Glasplatten, die einander gegenüberliegen; und die Zwischenschicht für Verbundglas nach einem der Ansprüche 1 bis 8, die zwischen dem Paar von Glasplatten angeordnet ist.

## Revendications

1. Couche intermédiaire pour verre stratifié comprenant stratifier en alternance au moins une couche de peau et deux couches de noyau ou plus, la couche de peau ayant un module de stockage de 1,0 x 10⁶ Pa ou plus mesuré par un test de viscoélasticité dynamique dans des conditions d'une fréquence de 1 Hz, d'un angle de balancement gamma de 0,01 % et d'une température de 20°C, et les couches de noyau ayant chacune un module de stockage de moins de 1,0 x 10⁶ Pa mesuré de la même manière que la couche de peau,
dans laquelle une valeur d'un produit d'une valeur obtenue en établissant la moyenne d'épaisseurs (mm) des couches de noyau respectives et d'une épaisseur (mm) de la couche intermédiaire entière pour verre stratifié est de 0,15 ou plus,
dans laquelle deux couches les plus à l'extérieur de la couche intermédiaire pour verre stratifié sont composées des couches de peau.

2. Couche intermédiaire pour verre stratifié selon la revendication 1,
dans laquelle une distance d'une surface sur un côté d'une surface principale de la couche intermédiaire pour verre stratifié de la couche de noyau étant la plus loin de la surface principale en question à la surface principale en question de la couche intermédiaire, et
une distance d'une surface sur un côté d'une autre surface principale de la couche intermédiaire pour verre stratifié de la couche de noyau étant la plus loin de l'autre surface principale en question à l'autre surface principale en question de la couche intermédiaire sont toutes deux de 0,6 à 5,0 mm.

3. Couche intermédiaire pour verre stratifié selon la revendication 1 ou 2,
dans laquelle une épaisseur de la couche intermédiaire entière pour verre stratifié est de 0,8 à 5,2 mm.

4. Couche intermédiaire pour verre stratifié selon l'une quelconque des revendications 1 à 3, comprenant trois couches de noyau ou plus.

5. Couche intermédiaire pour verre stratifié selon l'une quelconque des revendications 1 à 4,
dans laquelle une valeur obtenue en soustrayant le module de stockage de la couche de noyau du module de stockage de la couche de peau est dans une plage de 2,0 x 10⁶ Pa à 3,0 x 10⁷ Pa.

6. Couche intermédiaire pour verre stratifié selon l'une quelconque des revendications 1 à 5,
dans laquelle une valeur d'un rapport de l'épaisseur de la couche intermédiaire entière pour verre stratifié sur l'épaisseur de chaque couche de noyau est de 11 ou plus.

7. Couche intermédiaire pour verre stratifié selon l'une quelconque des revendications 1 à 6,
dans laquelle une valeur d'un rapport de l'épaisseur de la couche intermédiaire entière pour verre stratifié sur l'épaisseur de chaque couche de noyau est de 15 ou plus.

8. Couche intermédiaire pour verre stratifié selon l'une quelconque des revendications 1 à 7,
dans laquelle chacune de la distance d'une surface, sur le côté d'une surface principale de la couche intermédiaire, de la couche de noyau qui est la plus loin de la surface principale en question de la couche intermédiaire à la surface principale en question de la couche intermédiaire et la distance d'une surface, sur le côté de l'autre surface principale de la couche intermédiaire, de la couche de noyau qui est la plus loin de l'autre surface principale de la couche intermédiaire à l'autre surface principale de la couche intermédiaire, est de 0,6 mm ou plus.

9. Verre stratifié comprenant : une paire de plaques de verre tournées l'une vers l'autre ; et la couche intermédiaire pour verre stratifié selon l'une quelconque des revendications 1 à 8 prise en sandwich entre la paire de plaques de verre.
